# EUROPEAN PATENT APPLICATION

(11) **EP 4 804 498 A1**
(43) Date of publication of application: **09.09.2026**
(21) Application number: 24897904.9
(22) Date of filing: 28.10.2024
(51) Int. Cl.: H04L 67/141, H04W 88/08, H04L 9/40, H04L 69/28

(54) **ELECTRONIC APPARATUS AND METHOD FOR MANAGING SESSION**

(30) Priority: 28.11.2023 KR 20230168699
(71) Applicant: Samsung Electronics Co., Ltd., Suwon-si, Gyeonggi-do 16677 (KR)
(72) Inventor: SEO, Kwangtae, Suwon-si, Gyeonggi-do 16677 (KR)
(74) Representative: Gulde & Partner
(86) International application number: PCT/KR2024/016565
(87) International publication number: WO 2025/116307

(57) **Abstract**

According to one embodiment, a radio unit (RU) comprises: a transceiver; a memory for storing instructions; and a processor. The instructions, when executed by the processor, cause the RU to establish a first session and a second session with a client server including at least one of a distributed unit (DU) or a service management and orchestration (SMO). The instructions, when executed by the processor, cause the RU to transmit or receive at least one first message for an operation for supervision to or from the client server through the first session. The instructions, when executed by the processor, cause the RU to transmit or receive, to or from the client server through the second session, at least one second message for an operation for a management plane between the DU and the RU while the at least one first message is transmitted or received through the first session.

## Description

### [Technical Field]

The present disclosure relates to an electronic device and a method for managing a session.

### [Background Art]

As transmission capacity increases in a wireless communication system, a function split that functionally separates a base station is being applied. According to the function split, the base station may be separated into a distributed unit (DU) and a radio unit (RU). A fronthaul interface is defined for communication between the DU and the RU.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a radio unit (RU) may comprise a transceiver, memory storing instructions, and a processor. The instructions, when executed by the processor, may cause the RU to establish a first session and a second session distinct from the first session with a client server comprising at least one of a distributed unit (DU) or a service management and orchestration (SMO). The instructions, when executed by the processor, may cause the RU to transmit to the client server or receive from the client server, at least one first message for an operation related to supervision through the first session. The instructions, when executed by the processor, may cause the RU to, while the at least one first message is transmitted or received through the first session, transmit to the client server or receive from the client server, at least one second message for an operation related to a management plane (M-plane) between the DU and the RU through the second session.

According to an embodiment, a method performed by a radio unit (RU) may comprise establishing a first session and a second session distinct from the first session with a client server comprising at least one of a distributed unit (DU) or a service management and orchestration (SMO). The method may comprise transmitting to the client server or receiving from the client server, at least one first message for an operation related to supervision through the first session. The method may comprise, while the at least one first message is transmitted or received through the first session, transmitting to the client server or receiving from the client server, at least one second message for an operation related to a management plane (M-plane) between the DU and the RU through the second session.

According to an embodiment, a client server may comprise a transceiver, memory storing instructions, and a processor. The instructions, when executed by the processor, may cause the client server to establish a first session and a second session distinct from the first session with a radio unit (RU). The instructions, when executed by the processor, may cause the client server transmit to the RU or receive from the RU, at least one first message for an operation related to supervision through the first session. The instructions, when executed by the processor, may cause the client server, while the at least one first message is transmitted or received through the first session, transmit to the RU or receive from the RU, at least one second message for an operation related to a management plane (M-plane) between a distributed unit (DU) and the RU through the second session.

According to an embodiment, a method performed by a client server may comprise establishing a first session and a second session distinct from the first session with a radio unit (RU). The method may comprise transmitting to the RU or receiving from the RU, at least one first message for an operation related to supervision through the first session. The method may comprise, while the at least one first message is transmitted or received through the first session, transmitting to the RU or receiving from the RU, at least one second message for an operation related to a management plane (M-plane) between a distributed unit (DU) and the RU through the second session.

### [Description of the Drawings]

FIG. 1 illustrates a wireless communication system.
FIG. 2A illustrates a fronthaul interface.
FIG. 2B illustrates a fronthaul interface of an open (O)-radio access network (RAN).
FIG. 3A illustrates a functional configuration of a distributed unit (DU).
FIG. 3B illustrates a functional configuration of a radio unit (RU).
FIG. 4 illustrates an example of a function split between a DU and an RU.
FIG. 5 illustrates an example of an architecture for a function split between a DU and an RU.
FIG. 6A illustrates an example of a management plane configured based on a hierarchical model.
FIG. 6B illustrates an example of a management plane configured based on a hybrid model.
FIG. 7 illustrates an example of management plane interfaces.
FIG. 8 illustrates an example of an operation related to "start up" installation.
FIG. 9 illustrates an example of an operation related to "call home".
FIG. 10 illustrates an example of an operation for monitoring a NETCONF connection.
FIG. 11A illustrates an example of a session for an operation related to supervision and a management plane.
FIG. 11B illustrates an example in which an operation related to supervision and a management plane is performed in one session.
FIG. 12A illustrates an example of an operation in which a NETCONF server and a NETCONF client establish two NETCONF sessions.
FIG. 12B illustrates an example of an operation in which a NETCONF server and a NETCONF client establish two NETCONF sessions.
FIG. 13A illustrates an example of a session for supervision and a session for an operation related to a management plane.
FIG. 13B illustrates an example in which an operation related to supervision and a management plane is performed in two sessions.
FIG. 14 illustrates a flowchart related to an operation of an RU.
FIG. 15 illustrates a flowchart related to an operation of a client server.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a resource (e.g., a symbol, a slot, a subframe, a radio frame, a subcarrier, a resource element (RE), a resource block (RB), a bandwidth part (BWP), or an occasion), a term for a computation state (e.g., a step, an operation, or a procedure), a term referring to data (e.g., a packet, a user stream, information, a bit, a symbol, or a codeword), a term referring to a channel, a term referring to network entities, a term referring to a component of a device, and the like used in the following descriptions are exemplified for convenience of description. Therefore, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

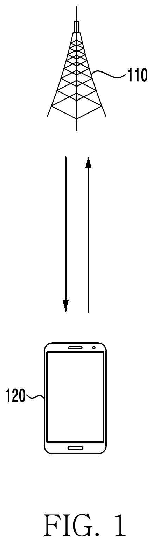

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

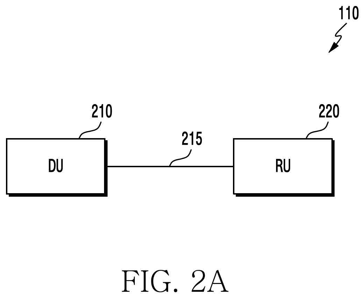

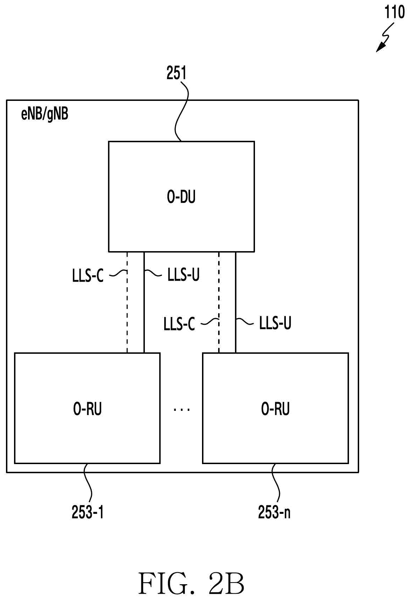

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations is reduced, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

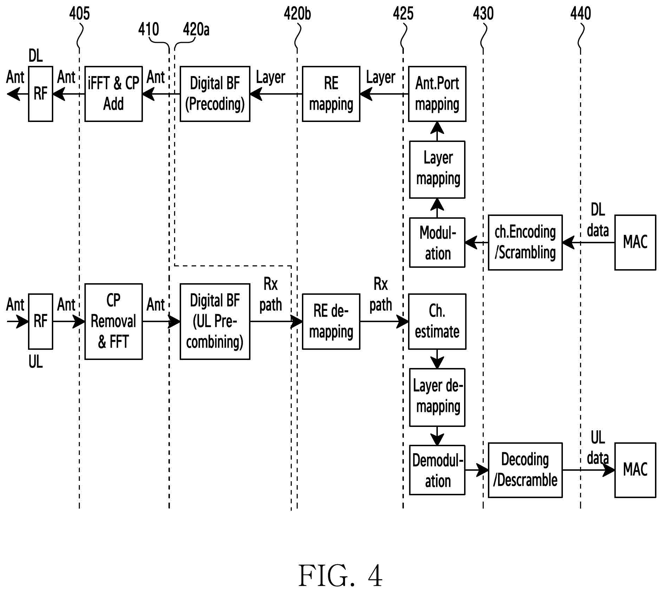

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

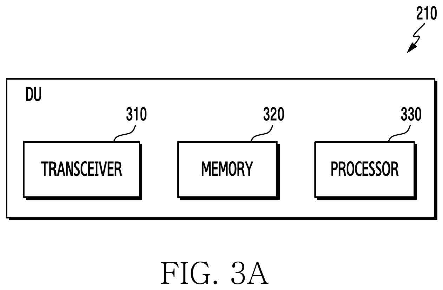

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

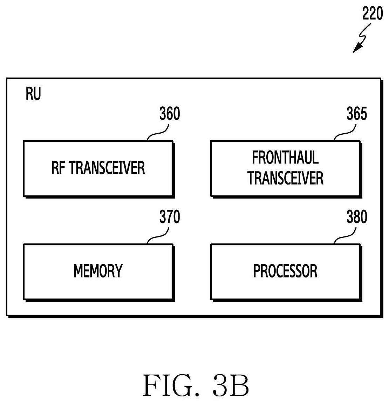

FIG. 3B illustrates a functional configuration of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of embodiments, may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure. Hereinafter, various embodiments of the present disclosure are described using the standard term of eCPRI or O-RAN, but are not limited thereto. For example, in various embodiments of the present disclosure, a CPRI standard may be used as a fronthaul interface.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.
1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.
1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.
1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

In the following description, a network configuration protocol (NETCONF) client (or a client server) (e.g., a DU 210 of FIGS. 2A to 3B) may be configured to manage a NETCONF server. The NETCONF client and the NETCONF server may configure a session for performing supervision and a session for performing an operation related to a management plane (M-plane). The session for performing the supervision and the session for performing the operation related to the management plane may be distinguished from each other. Hereinafter, a technical feature for configuring the session for performing the supervision and the session for performing the operation related to the management plane will be described.

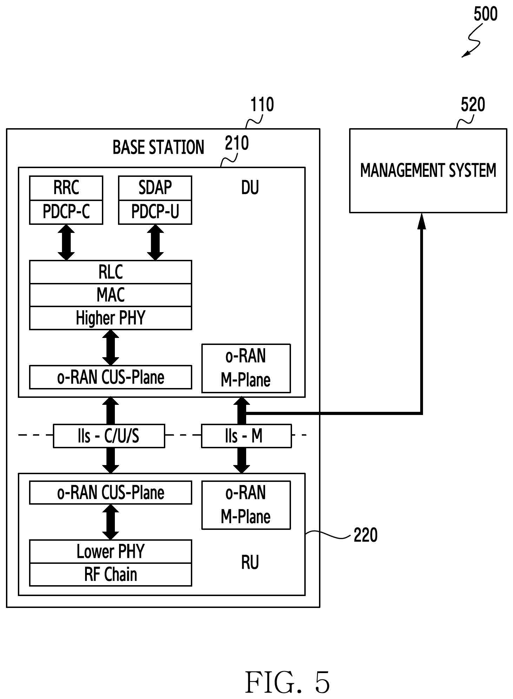

FIG. 5 illustrates an example of an architecture for a function split between a DU and an RU.

Referring to FIG. 5, an architecture 500 may correspond to the fronthaul interface illustrated in FIG. 2B. The architecture 500 may include a base station 110 and a management system 520. A DU 210 may correspond to the O-DU 251 of FIG. 2B. An RU 220 may correspond to the O-RU 253-1 of FIG. 2B.

For example, an interface lower-layer split M-plane (LLS-M) between the DU 210 and the RU 220 may provide a management plane (M-plane) through an LLS interface. The LLS-M may perform an operation related to initialization, configuration, and management of the RU 220 to support the above-described function split.

For example, the management plane (M-plane) may be configured based on a yet another next generation (YANG) model. Unlike a management information base (MIB) used in an existing simple network management protocol (SNMP), the YANG model used in NETCONF may be in a tree form, and a list may be included in a list. Accordingly, the YANG model may represent a hierarchical relationship. The YANG model may put multiple list values into one command and collectively change them. In a case of putting the multiple lists into one command, in a case that an error occurs while changing a setting with multiple times of commands in order to change a service state, a problem of affecting a service by ceasing in a state in which continuing progress and restoration are impossible may be prevented.

For example, the management system 520 may be included in at least one of the DU 210, a service management and orchestration (SMO), and/or a network management system (NMS). The management system 520 may be configured to manage an operation of the RU 220.

For example, a management plane configured based on the NETCONF and the YANG model may be used to support management characteristics including "start-up" installation, software management, configuration management, performance management, fault management, and file management.

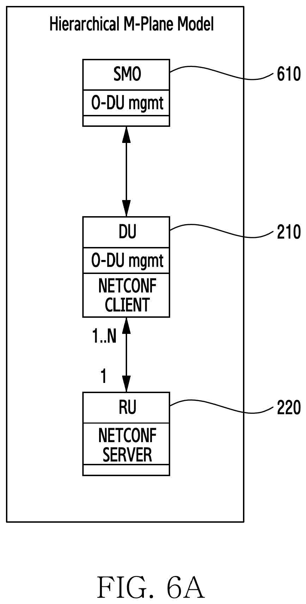

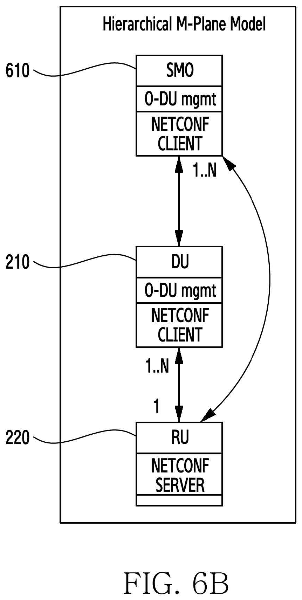

According to an embodiment, the management plane may support two architecture models. The two architecture models will be described below in FIGS. 6A and 6B.

FIG. 6A illustrates an example of a management plane configured based on a hierarchical model.

FIG. 6B illustrates an example of a management plane configured based on a hybrid model.

Referring to FIG. 6A, a management plane (M-plane) may be configured based on the hierarchical model. In the management plane configured based on the hierarchical model, an RU 220 may be managed by one or one or more DUs by using a management plane interface based on NETCONF. For example, an interface between an SMO 610 (or an NMS) and a DU 210 may be configured. However, the interface between the SMO 610 and the RU 220 may not be configured. The SMO 610 may not directly manage the RU 220. The SMO 610 may be an example of the management system 520 of FIG. 5.

Referring to FIG. 6B, a management plane (M-plane) may be configured based on the hybrid model. In the management plane configured based on the hybrid model, in addition to a logical interface between the DU 210 and the RU 220, one or more direct logical interfaces between the SMO 610 and the RU 220 may be configured. For example, an interface between the SMO 610 (or the NMS) and the DU 210 may be configured. In addition, an interface between the SMO 610 and the RU 220 may also be configured. The SMO 610 may directly manage the RU 220.

According to an embodiment, in the management plane configured based on the hybrid model for the RU 220 by the SMO 610, the RU 220 may have end-to-end internet protocol (IP) layer connectivity with the SMO 610. From a physical network perspective, a connection between the SMO 610 and the RU 220 may be established through the DU 210. The DU 210 may perform a role of an IP/ethernet packet forwarder. The DU 210 may forward a packet between the RU 220 and the SMO 610. Direct logical communication between the RU 220 and the SMO 610 may be enabled through the RU 220 to which routable IPs or local private IPs resolved (or implemented by the DU 210) by a network address translation (NAT) function in a network are allocated.

Referring to FIGS. 6A and 6B, explicit signaling indicating that the RU 220 operates based on the hierarchical model or the hybrid model may not exist. A NETCONF server may support multiple NETCONF sessions. All RUs may support a hierarchical deployment and a hybrid deployment.

For example, NETCONF may be used as a network element management protocol. YANG may be used as a data modeling language. By using a standardized framework and a common modeling language, operator network integration may be simplified in a case of an element sharing a common set of capabilities, as well as integration between the DU 210 and the RU 220. The framework may support integration of products having differing capabilities by a disclosed data model. The NETCONF may support an architecture based on the hybrid model so that a plurality of clients may subscribe to and receive information generated in the NETCONF server.

According to an embodiment, based on a transport topology, various modes of a network connection may be established among the DU 210, the RU 220, and the SMO 610. A basic requirement for the management plane may be to have end-to-end IP connectivity between the RU 220 and elements for managing the RU 220. The elements for managing the RU 220 may include the DU 210 or the SMO 610. The elements for managing the RU 220 may be referred to as RU controllers. The RU 220 may support IPv4 or IPv6 and may selectively support a dual stack (IPv4 and IPv6).

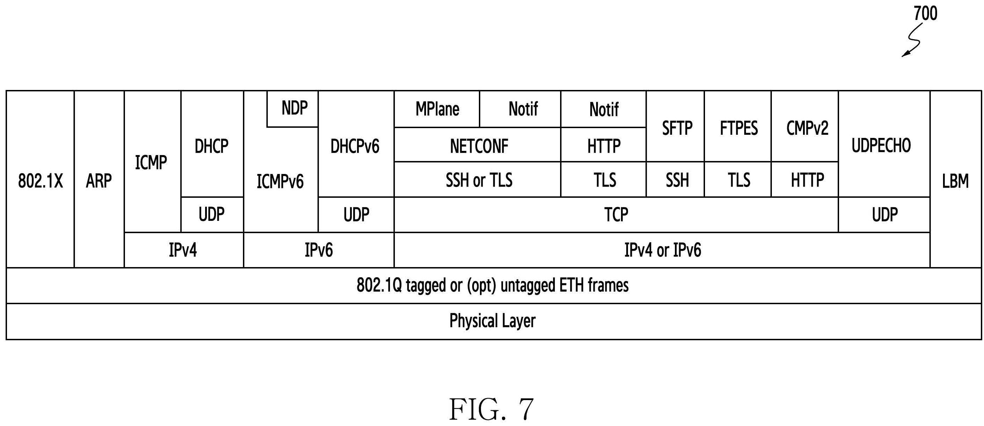

FIG. 7 illustrates an example of management plane interfaces.

Referring to FIG. 7, a management plane interface may be defined between an RU controller and an RU 220. A protocol stack 700 of the management plane interface may be illustrated in FIG. 7.

For example, according to the protocol stack 700, a first layer may be configured as a physical layer. A second layer may be configured as an ethernet MAC layer. A third layer may be configured as an IP layer based on IPv4 or IPv6. A fourth layer may be configured as a TCP layer. A security layer may be configured as an SSH layer or a TLS layer.

For example, a transport network layer constructed based on IP transport, secure shell/transmission control protocol (SSH/TCP), and transport layer security (TLS) may be used to transfer a management plane message between the RU controller (e.g., a DU 210 or an SMO 610) and the RU 220. According to an embodiment, the RU 220 may support a function for supporting an asynchronous notification transmitted by using hypertext transfer protocol over secure socket layer (HTTPS). When the RU controller corresponds to the SMO 610 operating as a non-persistent NETCONF session for the RU 220, the function may enable system optimization.

According to an embodiment, a management plane may provide various functions to the RU 220. The functions provided by the management plane may be implemented by using functions provided in NETCONF.

For example, the management plane may provide a "start up" installation function. While "start up" is performed, the RU 220 may obtain network layer parameters statically or dynamically through dynamic host configuration protocol (DHCP) or DHCP version 6 (DHCPv6). While "start up" is performed, the RU 220 may obtain an IP address of at least one RU controller (e.g., the DU 210 or the SMO 610), and the RU 220 may establish a NETCONF connection by using a "call home" function. In a case that the RU 220 operates in an environment in which the SMO 610 is included, the RU 220 may obtain an IP address of an event controller, and the RU 220 may perform "pnfRegistration" that triggers the SMO 610 to establish the NETCONF connection by using information recovered in a "pnfRegistration" procedure.

For example, the management plane may provide a software management function when requested by the RU controller (e.g., the DU 210 or the SMO 610). The management plane may be used for download, installation, verification, and activation of new software. Software download may be triggered by NETCONF remote procedure call (RPC) operations. Actual software download may be performed by using SSH file transfer protocol (sFTP) through SSH (sFTP with SSH) or file transfer protocol explicit-mode secure (FTPES) through TLS (FTPES with TLS).

For example, the management plane may provide a configuration management function. Configuration management may include various scenarios, such as retrieve resource state, modify resource state, parameter modification, and parameter retrieval. NETCONF "get-config" and "edit-config RPC" may be used for configuration parameter retrieval and update in the RU 220.

For example, the management plane may perform performance management. The performance management may include measurements and counters used to collect data related to operations of the RU 220. The performance management may be performed to optimize an operation of the RU 220. A measurement result may be reported by two options. The measurement result may be reported by a YANG notification or file upload. As an example, for reporting through the YANG notification, a statistics definition of a YANG model per measurement group may be used. As an example, the measurement result may be reported based on a file upload procedure. The measurement result may be periodically stored in a data file.

For example, the management plane may perform fault management. The fault management may be used to transmit an alarm notification to a NETCONF client. Through the fault management, the alarm notification (or alarm subscription) may be enabled or disabled.

For example, the management plane may perform file management. Through the file management, the RU controller (e.g., the DU 210 or the SMO 610) may trigger the RU 220 to upload a file stored in the RU 220 to the RU controller. The RU 220 may provide various types of files, and the retrieved files may be used for various purposes. Simultaneous multiple file upload operations may be supported in the same SFTP or FTPES connection between the RU 220 and the DU 210/SMO 610.

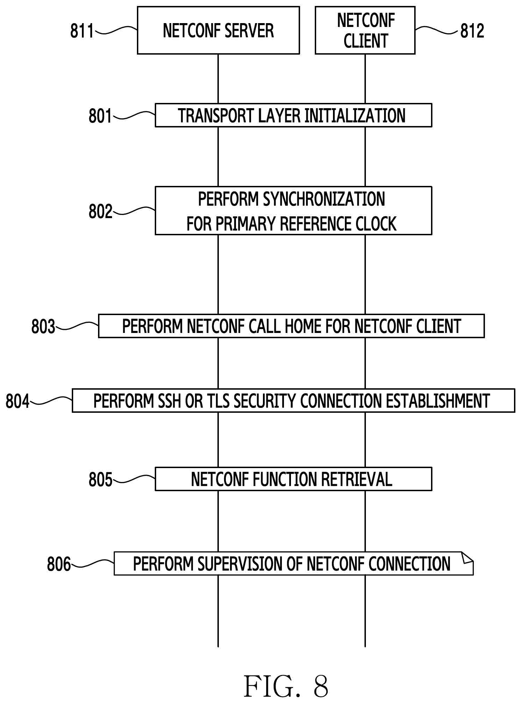

FIG. 8 illustrates an example of an operation related to "start up" installation.

Referring to FIG. 8, a NETCONF server 811 and a NETCONF client 812 may perform operations related to the "start up" installation. Operations 801 to 806 may indicate operations related to supervision of a NETCONF connection among the operations related to the "start up" installation. The NETCONF server 811 may include an RU 220. The NETCONF client 812 may include a DU 210 and/or an SMO 610. The NETCONF server 811 may be referred to as the RU 220. The NETCONF client 812 may be referred to as the DU 210 and/or the SMO 610.

In the operation 801, the NETCONF server 811 and the NETCONF client 812 may perform transport layer initialization. For example, the NETCONF server 811 may perform a management plane transport layer resolution (e.g., DHCP, MAC, VLAN, or IP) operation. The NETCONF server 811 may recover an IP address of the NETCONF client 812 and/or a pnfRegistration event-collector.

In the operation 802, the NETCONF server 811 may perform synchronization of the NETCONF server 811 for a primary reference clock. According to an embodiment, the operation 802 may also be performed simultaneously with the operation 801.

In the operation 803, the NETCONF server 811 may perform "NETCONF call home" for discovering the NETCONF client 812. For example, the NETCONF server 811 may transmit "NETCONF call home" to the NETCONF client 812.

In the operation 804, the NETCONF client 812 may perform SSH or TLS connection establishment. For example, the NETCONF client 812 may establish an SSH session or TLS session connection with the NETCONF server 811.

In the operation 805, the NETCONF server 811 and the NETCONF client 812 may perform NETCONF function retrieval.

In the operation 806, the NETCONF server 811 and the NETCONF client 812 may perform supervision of a NETCONF connection.

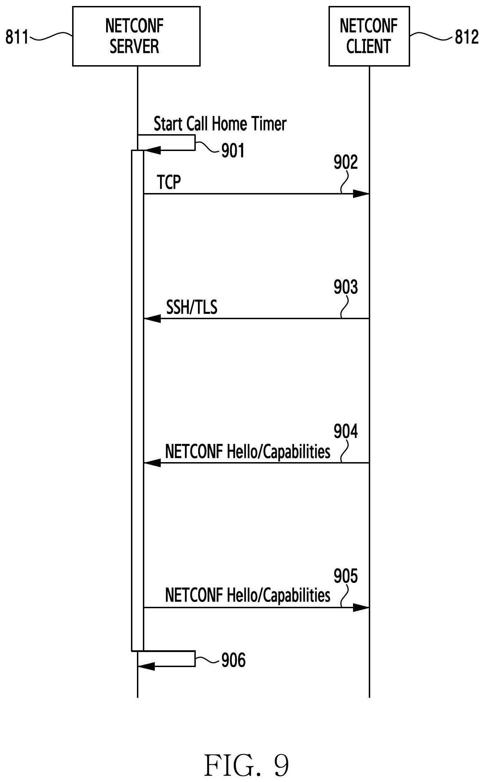

FIG. 9 illustrates an example of an operation related to "call home".

Referring to FIG. 9, in operation 901, a NETCONF server 811 (e.g., an RU 220) may start a call home timer.

In operation 902, the NETCONF server 811 may start a TCP connection to a NETCONF client 812. When the NETCONF server 811 performs call home for NETCONF clients within a "client-info" container, the NETCONF server 811 may use a signaled port or a manually configured port. When the NETCONF server 811 performs call home for NETCONF clients within a "configured-client-info" container, the NETCONF server 811 (e.g., the RU 220) may use a port configured by another NETCONF client. In a case that a port is not signaled, is not manually configured within the "client-info" container, or is not configured within the "configured-client-info" container, the NETCONF server 811 may use a port configured in "call-home-ssh-port" to indicate that the NETCONF server 811 protects a NETCONF connection by using SSHv2. The NETCONF server 811 may use a port configured in "call-home-tls-port" to indicate that the NETCONF server 811 protects a NETCONF connection by using TLS.

For example, in a case that "call-home-ssh-port" does not exist, the NETCONF server 811 may use a port 4334 to indicate that the NETCONF server 811 protects the NETCONF connection by using SSHv2. In a case that "call-home-tls-port" does not exist, the NETCONF server 811 may use the port 4334 to indicate that the NETCONF server 811 protects the NETCONF connection by using TLS.

In operation 903, when the NETCONF client 812 accepts the TCP connection at an allocated port, the NETCONF client 812 may start an SSH session and/or a TLS connection.

In operations 904 and 905, the NETCONF client 812 may start a NETCONF session connection by using the SSH session and/or the TLS connection. For example, the NETCONF client 812 may transmit, to the NETCONF server 811, a hello message including information on a capability of the NETCONF client 812. The NETCONF server 811 may transmit, to the NETCONF client 812, a hello message including information on a capability of the NETCONF server 811.

In operation 906, the NETCONF server 811 may terminate the call home timer.

Based on the operation 901 to the operation 906, operations related to call home may be performed. The NETCONF server 811 and the NETCONF client 812 may establish a NETCONF session connection based on the operations related to call home.

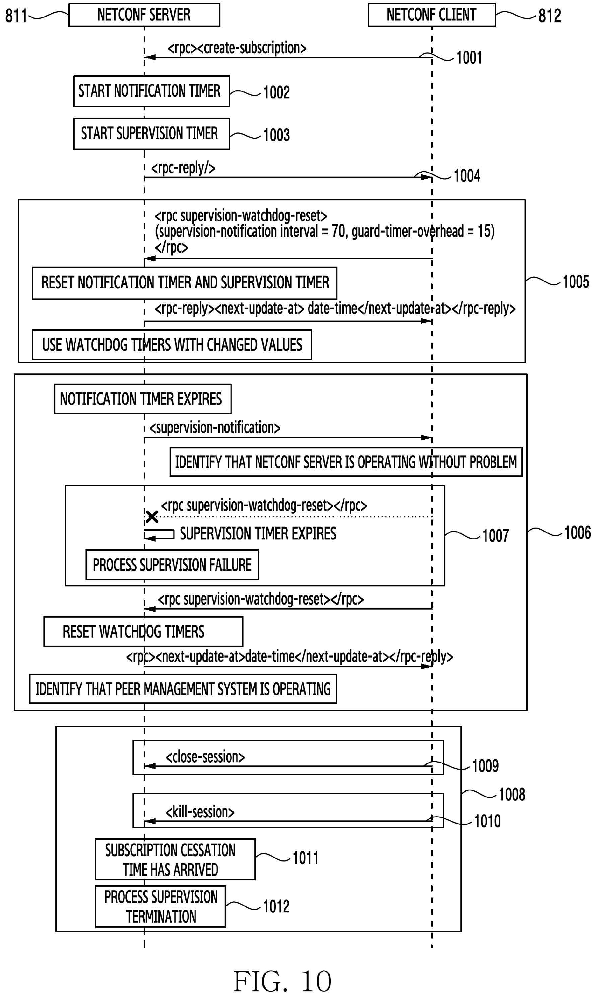

FIG. 10 illustrates an example of an operation for monitoring a NETCONF connection.

Referring to FIG. 10, when a NETCONF server 811 (e.g., an RU 220) has a session with a NETCONF client 812 (e.g., a DU 210 or an SMO 610) subscribed to receive "supervision-notification," the NETCONF server 811 may operate watchdog timers (e.g., a supervision timer and a notification timer) to check whether the session with the NETCONF client 812 is maintained. The NETCONF server 811 may provide a NETCONF notification to notify a remote system that a management system is operating.

In a case of the NETCONF server 811 supporting a "SUPERVISION-WITH-SESSION-ID" function, a "supervision-notification" message may indicate a NETCONF session ID related to subscription of an event notification. When the NETCONF client 812 subscribes to receive a supervision notification, the NETCONF client 812 may use its session ID in a subscription filter criterion for indicating, to the NETCONF server 811, "supervision-notification" events to be delivered by the NETCONF server 811 to the NETCONF client 812. The session ID may be provided to the NETCONF client 812 by the NETCONF server 811 in initial Hello message exchange.

The NETCONF client 812 (e.g., an RU controller, the DU 210, or the SMO 610) that subscribes to "supervision-notification" may notify the NETCONF server 811 that the NETCONF client 812 is operating by using <supervision-watchdog-reset> RPC.

The NETCONF server 811 may support an operation of individual supervision watchdog timers for each NETCONF client subscribed to "supervision-notification".

The authorized NETCONF client 812 may enable an operation of the watchdog timers by creating a "supervision-notification" subscription. When the operation of the watchdog timers is enabled, a timer may be considered to be running.

The NETCONF server 811 (e.g., the RU 220) may support bidirectional monitoring of the NETCONF connection by using two timers referred to as watchdog timers. For example, the two timers may include a notification timer and a supervision timer.

A value of the notification timer may be set to a value corresponding to "supervision-notification-interval." A default value of the notification timer may be set to 60 seconds. The NETCONF server 811 may transmit "supervision-notification" to the NETCONF client 812 subscribed to receive "supervision-notification." The NETCONF server 811 may transmit "supervision-notification" based on an expiry of the notification timer. The NETCONF client 812 (or the RU controller, the DU 210, or the SMO 610) may check whether a NETCONF connection to the NETCONF server 811 operates based on the received "supervision-notification".

A value of the supervision timer may be set to a sum of the value corresponding to "supervision-notification-interval" and "guard-timer-overhead." A default value of "supervision-notification-interval" may be set to 60 seconds. A default value of "guard-timer-overhead" may be set to 10 seconds. The NETCONF server 811 may identify a supervision failure operation based on an expiry of the supervision timer. To prevent the expiry of the supervision timer, the NETCONF client 812 subscribed to receive "supervision-notification" may repeatedly reset the supervision timer. Resetting of the supervision timer may be considered, in the NETCONF server 811, as confirmation that a NETCONF connection with the NETCONF client 812 is operating.

In operation 1001, the NETCONF client 812 may subscribe to receive "supervision-notification." The NETCONF client 812 may transmit a message for subscription creation to the NETCONF server 811.

In operation 1002, the NETCONF server 811 may start the notification timer set to the default value.

In operation 1003, it may start the supervision timer set to the default value.

In operation 1004, the NETCONF server 811 may transmit a message for subscription confirmation to the NETCONF client 812.

Operation 1005, operation 1006, and operation 1008 may be related to an operation for supervision.

The operation 1005 may be related to an operation for changing a default value of a timer. The NETCONF client 812 may transmit a message for resetting watchdog timers to the NETCONF server 811. The message may include information for setting "supervision-notification-interval" and information for setting "guard-timer-overhead." The NETCONF server 811 may reset the notification timer and the supervision timer for a NETCONF session. The NETCONF server 811 may reset the notification timer and the supervision timer based on the information for setting "supervision-notification-interval" and the information for setting "guard-timer-overhead." The NETCONF server 811 may transmit, to the NETCONF client 812, a message indicating that the notification timer and the supervision timer have been reset. The NETCONF server 811 may use the watchdog timers set to changed values.

The operation 1006 may be related to an operation for transmission of a supervision message. For example, the NETCONF server 811 may identify that the notification timer has expired. The NETCONF server 811 may transmit "supervision-notification" to the NETCONF client 812. "supervision-notification" may be transmitted to indicate that the NETCONF server 811 is operating without a problem.

The NETCONF client 812 may identify (or confirm) that a management system of the NETCONF server 811 is operating. The NETCONF client 812 may identify (or confirm) that the NETCONF server 811 is operating without a problem. The NETCONF client 812 may transmit a message for resetting watchdog timers to the NETCONF server 811. The NETCONF server 811 may reset the watchdog timers for the NETCONF session. The NETCONF server 811 may transmit, to the NETCONF client 812, a message indicating that the notification timer and the supervision timer have been reset. The NETCONF server 811 may identify (or confirm) that a peer management system is operating. According to an embodiment, in a case that the supervision timer expires, operation 1007 may be performed. The NETCONF server 811 may not receive the message for resetting the watchdog timers transmitted by the NETCONF client 812, and the supervision timer may expire. The NETCONF server 811 may process a supervision failure.

The operation 1008 may be related to an operation for termination of a supervision procedure by the NETCONF client 812.

In a case of closing the NETCONF session, operation 1009 may be performed. In the operation 1009, the NETCONF client 812 may transmit a message for closing the NETCONF session to the NETCONF server 811.

In a case of killing the NETCONF session, operation 1010 may be performed. In the operation 1010, the NETCONF client 812 may transmit a message for killing the NETCONF session to the NETCONF server 811.

In a case that a subscription cessation time arrives, operation 1011 may be performed. In the operation 1011, the NETCONF server 811 may identify that the subscription cessation time has arrived.

After one of the operation 1009 to the operation 1011 is performed, the NETCONF server 811 may process supervision termination.

When supervision for the NETCONF session is executed, the NETCONF server 811 may monitor the NETCONF session through the above-described operations 1001 to 1011.

In the following specification, an operation of the NETCONF server 811 and the NETCONF client 812 for the supervision for the NETCONF session will be described.

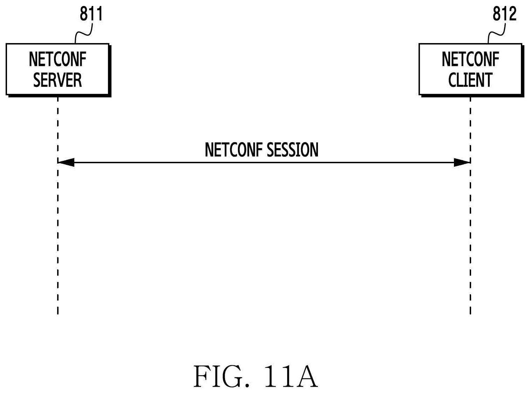

FIG. 11A illustrates an example of a session for an operation related to supervision and a management plane.

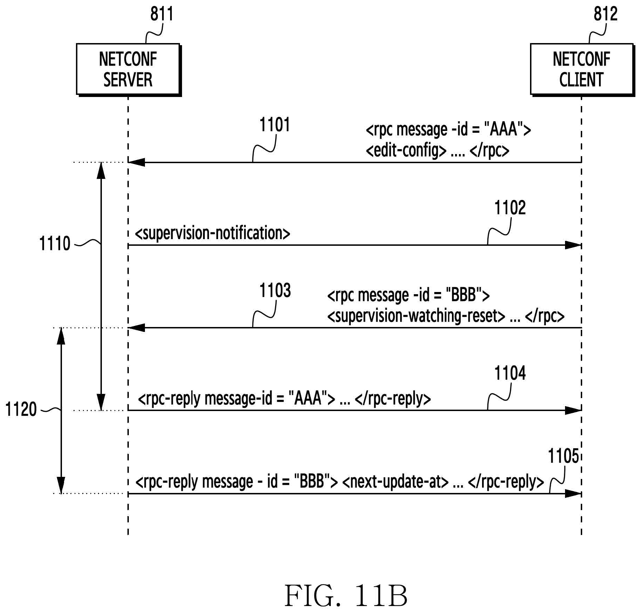

FIG. 11B illustrates an example in which an operation related to supervision and a management plane is performed in one session.

Referring to FIG. 11A, a NETCONF server 811 and a NETCONF client 812 may configure one NETCONF session. For example, the NETCONF server 811 may configure (or establish) one connected NETCONF session based on NETCONF call home. For example, based on one session, an operation related to supervision and the management plane may be performed.

Referring to FIG. 11B, a response procedure for a NETCONF <rpc> request follows a NETCONF specification (i.e., request for comments (RFC) 6241). The response procedure for the NETCONF <rpc> request follows a rule indicated in the following table.

**[Table 1]**

| |
|---|
| NETCONF <rpc> requests MUST be processed serially by the managed device. |
| Additional <rpc> requests MAY be sent before previous ones have been completed. |
| The managed device MUST send responses only in the order the requests were received. |

According to the Table 1, the NETCONF server 811 (e.g., an RU 220) should sequentially transmit, to the NETCONF client 812, a response to the NETCONF <rpc> request transmitted by the NETCONF client 812.

Accordingly, in a case that the NETCONF server 811 and the NETCONF client 812 perform an operation related to the management plane distinct from supervision by using one NETCONF session, the NETCONF server 811 should transmit, to the NETCONF client 812, <rpc-reply> in an order of the received NETCONF <rpc>.

In operation 1101, the NETCONF server 811 may transmit a first message in which "message-id" is "AAA" to the NETCONF client 812. The NETCONF server 811 may perform an operation related to the first message. A performance time of the operation related to the first message may be referred to as a time interval 1110.

In operation 1102, while the operation related to the first message is performed, the NETCONF server 811 may transmit <supervision-notification> to the NETCONF client 812. For example, the NETCONF server 811 may transmit <supervision-notification> to the NETCONF client 812 based on identifying that a notification timer has expired. For example, the NETCONF server 811 may transmit <supervision-notification> to the NETCONF client 812 based on a designated time interval (e.g., 60 seconds). The designated time interval may be changed to a value requested by the NETCONF client 812.

In operation 1103, the NETCONF client 812 may transmit a second message in which "message-id" is "BBB." The second message may be a response message to <supervision-notification>. For example, the NETCONF client 812 may identify (or confirm) that a management system of the NETCONF server 811 is operating. The NETCONF client 812 may transmit, to the NETCONF server 811, the second message for resetting watchdog timers.

In operation 1104, after the time interval 1110, which is the performance time of the operation related to the first message, elapses, the NETCONF server 811 may transmit, to the NETCONF client 812, a third message that is a response message to the first message. According to the Table 1, the NETCONF server 811 may transmit, to the NETCONF client 812, the third message that is the response message to the first message received first.

In operation 1105, after transmitting the third message that is the response message to the first message, the NETCONF server 811 may transmit, to the NETCONF client 812, a fourth message that is a response message to the second message. For example, the NETCONF server 811 may transmit, to the NETCONF client 812, the fourth message indicating that the notification timer and a supervision timer have been reset. Operation 1102, operation 1103, and operation 1105 may correspond to at least a portion of the operation 1006 of FIG. 10. A time interval 1120 may be a time interval between a time point at which the second message is received and a time point at which the fourth message is transmitted.

According to an embodiment, in a case that the time interval 1110 increases according to the operation related to the first message, the time interval 1120 may also increase. As the time interval 1120 increases, the NETCONF client 812 may late receive the fourth message that is the response message to the second message. In a case that the time interval 1120 becomes greater than a timeout value managed by the NETCONF server 811 and/or the NETCONF client 812, a NETCONF session may be determined as abnormal. As an example, in a case that the supervision timer expires before transmitting the fourth message, the NETCONF server 811 may identify a supervision failure. In a case that the supervision timer expires before transmitting the fourth message, the NETCONF server 811 may perform an operation according to the supervision failure. In a case that the NETCONF server 811 identifies the supervision failure, the NETCONF session may be closed. As in the above-described example, even in a case that the NETCONF session between the actual NETCONF server 811 and the NETCONF client 812 is normal, an abnormal situation in which the NETCONF session is determined as abnormal may occur. In FIG. 11B, the first message to the fourth message are exemplarily illustrated, but it is not limited thereto. According to various messages (or NETCONF rpc), the time interval 1120 may increase, and the NETCONF session may be determined as abnormal in the NETCONF server 811 and/or the NETCONF client 812.

According to an embodiment, in a case that a NETCONF session for supervision and a NETCONF session for the operation related to the management plane are distinct from each other, even in a case that the NETCONF session is normal, the abnormal situation in which the NETCONF session is determined as abnormal may be prevented. Accordingly, in the following specification, a technical feature in which the NETCONF session for supervision and the NETCONF session for the operation related to the management plane are distinct from each other will be described.

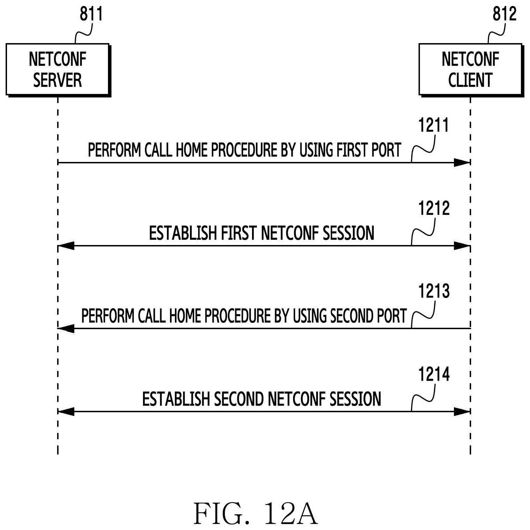

FIG. 12A illustrates an example of an operation in which a NETCONF server and a NETCONF client establish two NETCONF sessions.

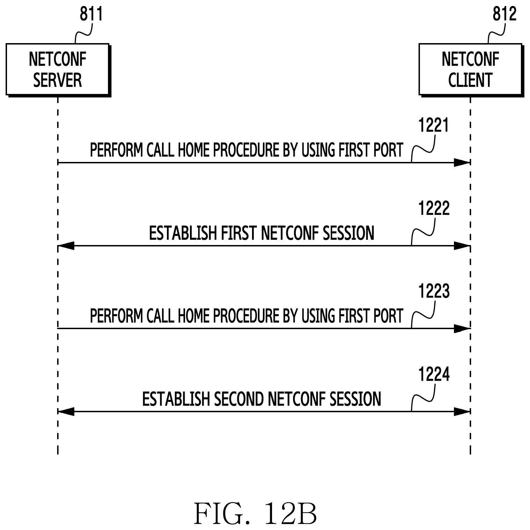

FIG. 12B illustrates an example of an operation in which a NETCONF server and a NETCONF client establish two NETCONF sessions.

Referring to FIGS. 12A and 12B, two sessions may be established to configure a NETCONF session for supervision and a NETCONF session for an operation related to a management plane. According to an embodiment, a NETCONF server 811 (e.g., an RU 220) and a NETCONF client 812 (e.g., an RU controller, a DU 210, or an SMO 610) may establish two sessions based on operation 1211 to operation 1214 illustrated in FIG. 12A. According to an embodiment, the NETCONF server 811 and the NETCONF client 812 may establish two sessions based on operation 1221 to operation 1224 illustrated in FIG. 12B.

Referring to FIG. 12A, in the operation 1211, the NETCONF server 811 may perform a call home procedure for the NETCONF client 812 by using a first port (e.g., a port 4334). For example, the NETCONF server 811 may transmit call home to the NETCONF client 812.

In the operation 1212, the NETCONF server 811 and the NETCONF client 812 may establish a first NETCONF session based on the call home procedure according to the operation 1211.

In the operation 1213, after the first NETCONF session is established, the NETCONF client 812 may perform a call home procedure for the NETCONF server 811 by using a second port (e.g., a port 830). For example, the NETCONF client 812 may transmit call home to the NETCONF server 811. In the operation 1211, the NETCONF server 811 performs the call home procedure for the NETCONF client 812, but in the operation 1213, the NETCONF client 812 may perform the call home procedure for the NETCONF server 811.

In the operation 1214, the NETCONF server 811 and the NETCONF client 812 may establish a second NETCONF session based on the call home procedure according to the operation 1213. The NETCONF client 812 may establish the second NETCONF session based on an IP connected with the NETCONF server 811.

Referring to FIG. 12B, in the operation 1221, the NETCONF server 811 may perform a call home procedure for the NETCONF client 812 by using the first port (e.g., the port 4334). For example, the NETCONF server 811 may transmit call home to the NETCONF client 812.

In the operation 1222, the NETCONF server 811 and the NETCONF client 812 may establish a first NETCONF session based on the call home procedure according to the operation 1221.

In the operation 1223, after the first NETCONF session is established, the NETCONF server 811 may perform a call home procedure for the NETCONF client 812 by using the first port (e.g., the port 4334). For example, the NETCONF server 811 may transmit call home to the NETCONF client 812.

In the operation 1224, the NETCONF server 811 and the NETCONF client 812 may establish a second NETCONF session based on the call home procedure according to the operation 1223. The NETCONF server 811 may establish the second NETCONF session distinct from the first NETCONF session based on transmitting new call home to the NETCONF client 812. The first NETCONF session and the second NETCONF session may be established through the same port (e.g., the first port).

In FIGS. 12A and 12B, an example in which two sessions are configured is illustrated, but it is not limited thereto. A plurality of sessions may also be configured between the NETCONF server 811 and the NETCONF client 812.

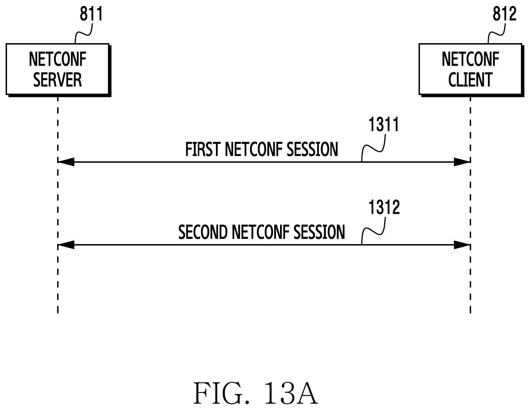

FIG. 13A illustrates an example of a session for supervision and a session for an operation related to a management plane.

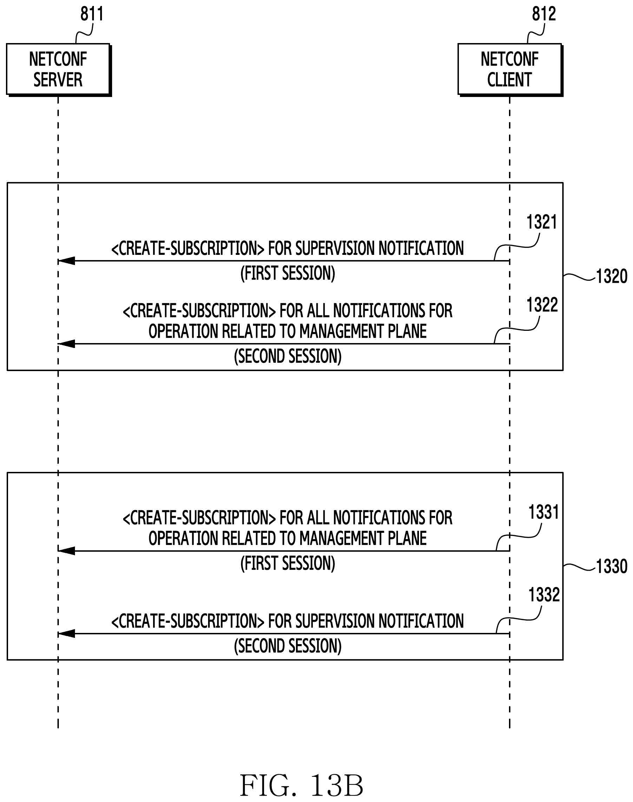

FIG. 13B illustrates an example in which an operation related to supervision and a management plane is performed in two sessions.

Referring to FIG. 13A, a NETCONF server 811 and a NETCONF client 812 may configure two NETCONF sessions. For example, the NETCONF server 811 may configure (or establish) two NETCONF sessions by performing one of the operations of FIG. 12A and the operations of FIG. 12B. The two sessions may include a first NETCONF session 1311 and a second NETCONF session 1312.

For example, both the first NETCONF session 1311 and the second NETCONF session 1312 may be established (or configured) based on SSH. For example, the first NETCONF session 1311 may be established (or configured) based on SSH, and the second NETCONF session 1312 may be established (or configured) based on TLS. For example, the first NETCONF session 1311 may be established (or configured) based on TLS, and the second NETCONF session 1312 may be established (or configured) based on SSH. For example, both the first NETCONF session 1311 and the second NETCONF session 1312 may be established (or configured) based on TLS.

Referring to FIG. 13B, one of the first NETCONF session 1311 and the second NETCONF session 1312 may be set as a NETCONF session for the supervision. A remaining one of the first NETCONF session 1311 and the second NETCONF session 1312 may be set as a NETCONF session for the operation of the management plane.

The NETCONF server 811 and the NETCONF client 812 may perform one of operation 1320 and operation 1330.

The operation 1320 may include operation 1321 and operation 1322.

In the operation 1321, the NETCONF client 812 may transmit <create-subscription> (or <create-subscription> RPC) for a supervision notification to the NETCONF server 811 in the first NETCONF session 1311. The NETCONF server 811 may enable watchdog timers (e.g., a supervision timer and a notification timer) based on receiving <create-subscription> from the NETCONF client 812. The NETCONF server 811 may enable the notification timer based on receiving <create-subscription>. After the notification timer expires, the NETCONF server 811 may transmit the supervision notification to the NETCONF client 812. According to the operation 1321, the NETCONF client 812 may perform <create-subscription> only for "supervision-notification" in the first NETCONF session 1311.

In the operation 1322, in the second NETCONF session 1312, the NETCONF client 812 may transmit <create-subscription> (or <create-subscription> RPC) for all notifications for the operation related to the management plane to the NETCONF server 811. According to the operation 1321, the NETCONF client 812 may perform <create-subscription> for all notifications for the operation related to the management plane in the second NETCONF session 1312. The NETCONF client 812 may not perform <create-subscription> for "supervision-notification" in the second NETCONF session 1312.

The operation 1330 may include operation 1331 and operation 1332.

In the operation 1331, in the first NETCONF session 1311, the NETCONF client 812 may transmit <create-subscription> (or <create-subscription> RPC) for the operation (e.g., all notifications) related to the management plane to the NETCONF server 811. According to the operation 1331, the NETCONF client 812 may perform <create-subscription> for all notifications for the operation related to the management plane in the first NETCONF session 1311. The NETCONF client 812 may not perform <create-subscription> for "supervision-notification" in the first NETCONF session 1311.

In the operation 1332, in the second NETCONF session 1312, the NETCONF client 812 may transmit <create-subscription> (or <create-subscription> RPC) for a supervision notification to the NETCONF server 811. The NETCONF server 811 may enable watchdog timers (e.g., a supervision timer and a notification timer) based on receiving <create-subscription> from the NETCONF client 812. The NETCONF server 811 may enable the notification timer based on receiving <create-subscription>. After the notification timer expires, the NETCONF server 811 may transmit the supervision notification to the NETCONF client 812. According to the operation 1331, the NETCONF client 812 may perform <create-subscription> only for "supervision-notification" in the second NETCONF session 1312.

As described above, in one of the first NETCONF session 1311 and the second NETCONF session 1312, only the operation for "supervision-notification" may be performed. In a remaining one of the first NETCONF session 1311 and the second NETCONF session 1312, the operation related to the management plane excluding "supervision-notification" may be performed.

In FIGS. 13A and 13B, an example in which two sessions are configured is illustrated, but it is not limited thereto. A plurality of sessions may also be configured between the NETCONF server 811 and the NETCONF client 812. One session among the plurality of sessions may be used to perform an operation (or a notification) related to the supervision. Another one session among the plurality of sessions may be used to perform an operation (or a notification) related to the management plane.

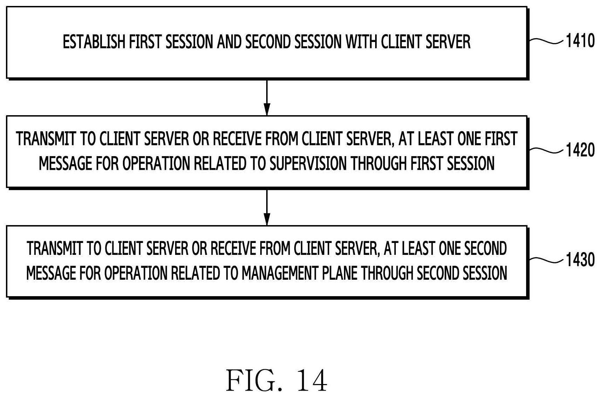

FIG. 14 illustrates a flowchart related to an operation of an RU. In the following embodiment, each operation may be performed sequentially, but is not necessarily performed sequentially. For example, an order of each operation may be changed, and at least two operations may be performed in parallel.

Referring to FIG. 14, an RU 220 described below may be an example of the above-described NETCONF server 811.

In operation 1410, the RU 220 (or a processor 380 of the RU 220, or an electronic device performed by the RU 220) may establish a first session and a second session with a client server. For example, the second session may be distinct from the first session. For example, an example of the client server may be a NETCONF client 812. The client server may include at least one of a DU 210 or an SMO 610.

According to an embodiment, the RU 220 may transmit, to the client server, a message for performing call home for the client server by using a first port (e.g., a port 4334). The RU 220 may establish the first session based on transmitting, to the client server, the message for performing call home for the client server. The RU 220 may transmit, to the client server, another message for performing call home for the client server by using the first port. The RU 220 may establish the second session based on transmitting, to the client server, the another message for performing call home for the client server. For example, the RU 220 may establish the first session based on transmitting, to the client server, the message for performing call home by using the first port, and may establish the second session based on transmitting, to the client server, the another message for performing call home by using the same first port. For example, an operation of establishing the first session may correspond to the operation 1221 and the operation 1222 of FIG. 12B. For example, an operation of establishing the second session may correspond to the operation 1223 and the operation 1224 of FIG. 12B.

According to an embodiment, the RU 220 may transmit, to the client server, a message for performing call home for the client server by using the first port (e.g., the port 4334). The RU 220 may establish the first session based on transmitting, to the client server, the message for performing call home for the client server. The RU 220 may receive, from the client server, another message for performing call home for the RU 220 by using a second port (e.g., a port 830) distinct from the first port. The RU 220 may establish the second session based on receiving, from the client server, the another message for performing call home for the RU 220. For example, the RU 220 may establish the first session based on transmitting, to the client server, the message for performing call home by using the first port, and may establish the second session based on receiving, from the client server, the another message for performing call home by using the second port distinct from the first port. For example, an operation of establishing the first session may correspond to the operation 1211 and the operation 1212 of FIG. 12A. For example, an operation of establishing the second session may correspond to the operation 1213 and the operation 1214 of FIG. 12A.

For example, each of the first session and the second session may be established based on one of SSH and TLS. The first session may be established based on one of SSH and TLS. The second session may be established based on one of SSH and TLS.

In operation 1420, the RU 220 may transmit to the client server or receive from the client server, at least one first message for an operation related to supervision through the first session.

For example, the at least one first message may include a third message for requesting a supervision notification and a fourth message for the supervision notification. The third message may include <create-subscription>. The fourth message may include <supervision-notification>.

The RU 220 may receive the third message from the client server. Based on the third message, the RU 220 may transmit, to the client server, the fourth message indicating that management by the client server is being performed. Based on the third message, the RU 220 may enable a first timer and a second timer. The first timer may include a notification timer. The second timer may include a supervision timer.

The RU 220 may transmit the fourth message to the client server based on an expiry of the first timer. A default value of the first timer may be set to 60 seconds. A value of the first timer may be changed by the client server. Based on transmitting the fourth message, before the second timer expires, the RU 220 may receive, from the client server, a fifth message for resetting the first timer and the second timer. The RU 220 may reset the first timer and the second timer based on the fifth message.

According to an embodiment, based on transmitting the fourth message, the RU 220 may identify that the fifth message for resetting the first timer and the second timer is not received until the second timer expires. The RU 220 may not receive the fifth message from the client server until the second timer expires. Based on identifying that the fifth message is not received until the second timer expires, the RU 220 may identify a failure of the operation related to supervision. For example, a default value of the second timer may be set to 70 seconds. A value of the second timer may be changed by the client server.

In operation 1430, the RU 220 may transmit to the client server or receive from the client server, at least one second message for an operation related to a management plane through the second session. For example, while the at least one first message is transmitted or received through the first session, the RU 220 may transmit to the client server or receive from the client server, the at least one second message for the operation related to the management plane between the DU 210 and the RU 220 through the second session.

The RU 220 may exchange the at least one first message related to supervision with the client server through the first session. The RU 220 may exchange the at least one second message for the operation related to the management plane with the client server through the second session.

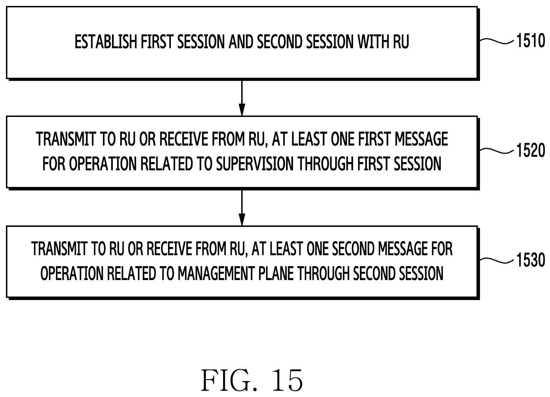

FIG. 15 illustrates a flowchart related to an operation of a client server. In the following embodiment, each operation may be performed sequentially, but is not necessarily performed sequentially. For example, an order of each operation may be changed, and at least two operations may be performed in parallel.

Referring to FIG. 15, an RU 220 described below may be an example of the above-described NETCONF server 811.

In operation 1510, a client server (or a processor of the client server, or an electronic device performed by the client server) may establish a first session and a second session with the RU 220. For example, the second session may be distinct from the first session. For example, an example of the client server may be a NETCONF client 812. The client server may include at least one of a DU 210 or an SMO 610.

According to an embodiment, the client server may receive, from the RU 220, a message for performing call home for the client server by using a first port (e.g., a port 4334). The client server may establish the first session based on receiving, from the RU 220, the message for performing call home for the RU 220. The client server may receive, from the RU 220, another message for performing call home for the client server by using the first port. The client server may establish the second session based on receiving, from the RU 220, the another message for performing call home for the client server. For example, the client server may establish the first session based on receiving, from the RU 220, the message for performing call home by using the first port, and may establish the second session based on receiving, from the RU 220, the another message for performing call home by using the same first port. For example, an operation of establishing the first session may correspond to the operation 1221 and the operation 1222 of FIG. 12B. For example, an operation of establishing the second session may correspond to the operation 1223 and the operation 1224 of FIG. 12B.

According to an embodiment, the client server may receive, from the RU 220, a message for performing call home for the client server by using the first port (e.g., the port 4334). The client server may establish the first session based on receiving, from the RU 220, the message for performing call home for the client server. The client server may transmit, to the RU 220, another message for performing call home for the RU 220 by using a second port (e.g., a port 830) distinct from the first port. The client server may establish the second session based on transmitting, to the RU 220, the another message for performing call home for the RU 220. For example, the client server may establish the first session based on receiving, from the RU 220, the message for performing call home by using the first port, and may establish the second session based on transmitting, to the RU 220, the another message for performing call home by using the second port distinct from the first port. For example, an operation of establishing the first session may correspond to the operation 1211 and the operation 1212 of FIG. 12A. For example, an operation of establishing the second session may correspond to the operation 1213 and the operation 1214 of FIG. 12A.

For example, each of the first session and the second session may be established based on one of SSH and TLS. The first session may be established based on one of SSH and TLS. The second session may be established based on one of SSH and TLS.

In operation 1520, the client server may transmit to the RU 220 or receive from the RU 220, at least one first message for an operation related to supervision through the first session.

For example, the at least one first message may include a third message for requesting a supervision notification and a fourth message for the supervision notification. The third message may include <create-subscription>. The fourth message may include <supervision-notification>.

The client server may transmit the third message to the RU 220. Based on the third message, the client server may receive, from the RU 220, the fourth message indicating that management by the client server is being performed. Based on the third message, the client server may enable a first timer and a second timer of the RU 220. The first timer may include a notification timer. The second timer may include a supervision timer.

The client server may receive the fourth message from the RU 220 based on an expiry of the first timer. A default value of the first timer may be set to 60 seconds. A value of the first timer may be changed by the client server. Based on receiving the fourth message, before the second timer expires, the client server may transmit, to the RU 220, a fifth message for resetting the first timer and the second timer. The RU 220 may reset the first timer and the second timer based on the fifth message.

According to an embodiment, the client server may not transmit the fifth message for resetting the first timer and the second timer until the second timer expires. The RU 220 may not receive the fifth message from the client server until the second timer expires. Based on identifying that the fifth message is not received until the second timer expires, the RU 220 may identify a failure of the operation related to supervision. For example, a default value of the second timer may be set to 70 seconds. A value of the second timer may be changed by the client server.

In operation 1530, the client server may transmit to the RU 220 or receive from the RU 220, at least one second message for an operation related to a management plane through the second session. For example, while the at least one first message is transmitted or received through the first session, the client server may transmit to the RU 220 or receive from the RU 220, the at least one second message for the operation related to the management plane between the DU 210 and the RU 220 through the second session.

The client server may exchange the at least one first message related to supervision with the RU 220 through the first session. The client server may exchange the at least one second message for the operation related to the management plane with the RU 220 through the second session.

According to an embodiment, a radio unit (RU) (e.g., the RU 220) may comprise a transceiver, memory comprising one or more storage media storing instructions, and at least one processor comprising processing circuitry. The instructions, when executed by the processor individually or collectively, may cause the RU to establish a first session and a second session distinct from the first session with a client server comprising at least one of a distributed unit (DU) or a service management and orchestration (SMO). The instructions, when executed by the processor individually or collectively, may cause the RU to transmit to the client server or receive from the client server, at least one first message for an operation related to supervision through the first session. The instructions, when executed by the processor individually or collectively, may cause the RU to, while the at least one first message is transmitted or received through the first session, transmit to the client server or receive from the client server, at least one second message for an operation related to a management plane (M-plane) between the DU and the RU through the second session.

According to an embodiment, each of the first session and the second session may be established based on one of secure shell/transmission control protocol (SSH) and transport layer security (TLS).

According to an embodiment, the at least one first message may include a third message for requesting a supervision notification and a fourth message for the supervision notification. The instructions, when executed by the processor individually or collectively, may cause the RU to receive, from the client server, the third message. The instructions, when executed by the processor individually or collectively, may cause the RU to transmit, based on the third message, the fourth message indicating that the RU is operating normally, to the client server.

According to an embodiment, the instructions, when executed by the processor individually or collectively, may cause the RU to enable, based on the third message, a first timer and a second timer.

According to an embodiment, the instructions, when executed by the processor individually or collectively, may cause the RU to transmit, based on an expiry of the first timer, the fourth message to the client server.

According to an embodiment, the instructions, when executed by the processor individually or collectively, may cause the RU to receive, based on transmitting the fourth message, a fifth message for resetting the first timer and the second timer before the second timer expires. The instructions, when executed by the processor individually or collectively, may cause the RU to reset, based on the fifth message, the first timer and the second timer.

According to an embodiment, the instructions, when executed by the processor individually or collectively, may cause the RU to identify, based on transmitting the fourth message, that a fifth message for resetting the first timer and the second timer is not received before the second timer expires. The instructions, when executed by the processor individually or collectively, may cause the RU to, based on identifying that the fifth message is not received before the second timer expires, identify a failure of an operation of the supervision.

According to an embodiment, the instructions, when executed by the processor individually or collectively, may cause the RU to establish, based on transmitting a message for performing call home to the client server using a first port to the client server, the first session. The instructions, when executed by the processor individually or collectively, may cause the RU to establish, based on transmitting another message for performing call home to the client server using the first port to the client server, the second session.

According to an embodiment, the instructions, when executed by the processor individually or collectively, may cause the RU to establish, based on transmitting a message for performing call home to the client server using a first port to the client server, the first session. The instructions, when executed by the processor individually or collectively, may cause the RU to establish, based on receiving another message for performing call home to the RU using a second port distinct from the first port from the client server, the second session.

According to an embodiment, a method performed by a radio unit (RU) (e.g., the RU 220) may comprise establishing a first session and a second session distinct from the first session with a client server comprising at least one of a distributed unit (DU) or a service management and orchestration (SMO). The method may comprise transmitting to the client server or receiving from the client server, at least one first message for an operation related to supervision through the first session. The method may comprise, while the at least one first message is transmitted or received through the first session, transmitting to the client server or receiving from the client server, at least one second message for an operation related to a management plane (M-plane) between the DU and the RU through the second session.

According to an embodiment, a client server (e.g., the DU 210 or the SMO 610) may comprise memory comprising one or more storage media storing instructions, and at least one processor comprising processing circuitry. The instructions, when executed by the at least one processor individually or collectively, cause the client server to establish a first session and a second session distinct from the first session with a radio unit (RU). The instructions, when executed by the at least one processor individually or collectively, cause the client server to transmit to the RU or receive from the RU, at least one first message for an operation related to supervision through the first session. The instructions, when executed by the at least one processor individually or collectively, cause the client server to, while the at least one first message is transmitted or received through the first session, transmit to the RU or receive from the RU, at least one second message for an operation related to a management plane (M-plane) between a distributed unit (DU) and the RU through the second session.

According to an embodiment, each of the first session and the second session may be established based on one of secure shell/transmission control protocol (SSH) and transport layer security (TLS).

According to an embodiment, the at least one first message may include a third message for requesting a supervision notification and a fourth message for the supervision notification. The instructions, when executed by the at least one processor individually or collectively, may cause the client server to transmit, to the RU, the third message. The instructions, when executed by the at least one processor individually or collectively, may cause the client server to receive, based on the third message, the fourth message indicating that the RU is operating normally from the RU.

According to an embodiment, the instructions, when executed by the at least one processor individually or collectively, may cause the client server to enable, based on transmitting the third message, a first timer and a second timer for the RU.

According to an embodiment, the instructions, when executed by the at least one processor individually or collectively, may cause the client server to receive, based on an expiry of the first timer, the fourth message from the RU.

According to an embodiment, the instructions, when executed by the at least one processor individually or collectively, may cause the client server to transmit, based on receiving the fourth message, a fifth message for resetting the first timer and the second timer before the second timer expires.

According to an embodiment, the instructions, when executed by the at least one processor individually or collectively, may cause the client server to establish, based on receiving a message for performing call home to the client server using a first port from the RU, the first session. The instructions, when executed by the at least one processor individually or collectively, may cause the client server to establish, based on receiving another message for performing call home to the client server using the first port from the RU, the second session.

According to an embodiment, the instructions, when executed by the at least one processor individually or collectively, may cause the client server to establish, based on receiving a message for performing call home to the client server using a first port to the client server, the first session. The instructions, when executed by the at least one processor individually or collectively, may cause the client server to establish, based on transmitting another message for performing call home to the RU using a second port distinct from the first port to the RU, the second session.

According to an embodiment, the client server may comprise at least one of a distributed unit (DU) or a service management and orchestration (SMO).

According to an embodiment, a method performed by a client server (e.g., the DU 210 or the SMO 610) may comprise establishing a first session and a second session distinct from the first session with a radio unit (RU). The method may comprise transmitting to the RU or receiving from the RU, at least one first message for an operation related to supervision through the first session. The method may comprise, while the at least one first message is transmitted or received through the first session, transmitting to the RU or receiving from the RU, at least one second message for an operation related to a management plane (M-plane) between a distributed unit (DU) and the RU through the second session.

According to an embodiment, a plurality of sessions may be configured between an RU (e.g., the RU 220) and a client server (e.g., the DU 210). One of the plurality of sessions may be used to perform a supervision operation. Another one of the plurality of sessions may be used to perform operations related to a management plane excluding the supervision operation. For example, the supervision operation of the management plane and other operations distinguished from the supervision operation may be managed as separate sessions. Accordingly, the supervision operation may be performed without violating a rule according to an RFC 6241 specification (or a rule of the Table 1). Accordingly, a problem in which a normally operating session is determined as abnormal may be solved.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A radio unit (RU) comprising:
a transceiver;
memory comprising one or more storage media storing instructions; and
at least one processor comprising processing circuitry,
wherein the instructions, when executed by the processor individually or collectively, cause the RU to:
establish a first session and a second session distinct from the first session with a client server comprising at least one of a distributed unit (DU) or a service management and orchestration (SMO),
transmit to the client server or receive from the client server, at least one first message for an operation related to supervision through the first session, and
while the at least one first message is transmitted or received through the first session, transmit to the client server or receive from the client server, at least one second message for an operation related to a management plane (M-plane) between the DU and the RU through the second session.

2. The RU of the claim 1, wherein each of the first session and the second session is established based on one of secure shell/transmission control protocol (SSH) and transport layer security (TLS).

3. The RU of the claim 1, wherein the at least one first message includes a third message for requesting a supervision notification and a fourth message for the supervision notification,
wherein the instructions, when executed by the processor individually or collectively, further cause the RU to:
receive, from the client server, the third message, and
transmit, based on the third message, the fourth message indicating that the RU is operating normally, to the client server.

4. The RU of the claim 3, wherein the instructions, when executed by the processor individually or collectively, further cause the RU to enable, based on the third message, a first timer and a second timer.

5. The RU of the claim 4, wherein the instructions, when executed by the processor individually or collectively, further cause the RU to transmit, based on an expiry of the first timer, the fourth message to the client server.

6. The RU of the claim 5, wherein the instructions, when executed by the processor individually or collectively, further cause the RU to:
receive, based on transmitting the fourth message, a fifth message for resetting the first timer and the second timer before the second timer expires, and
reset, based on the fifth message, the first timer and the second timer.

7. The RU of the claim 5, wherein the instructions, when executed by the processor individually or collectively, further cause the RU to:
identify, based on transmitting the fourth message, that a fifth message for resetting the first timer and the second timer is not received before the second timer expires, and
based on identifying that the fifth message is not received before the second timer expires, identify a failure of an operation of the supervision.

8. The RU of the claim 1, wherein the instructions, when executed by the processor individually or collectively, further cause the RU to:
establish, based on transmitting a message for performing call home to the client server using a first port to the client server, the first session, and
establish, based on transmitting another message for performing call home to the client server using the first port to the client server, the second session.

9. The RU of the claim 1, wherein the instructions, when executed by the processor individually or collectively, further cause the RU to:
establish, based on transmitting a message for performing call home to the client server using a first port to the client server, the first session, and
establish, based on receiving another message for performing call home to the RU using a second port distinct from the first port from the client server, the second session.

10. A method performed by a radio unit (RU), comprising:
establishing a first session and a second session distinct from the first session with a client server comprising at least one of a distributed unit (DU) or a service management and orchestration (SMO),
transmitting to the client server or receiving from the client server, at least one first message for an operation related to supervision through the first session, and
while the at least one first message is transmitted or received through the first session, transmitting to the client server or receiving from the client server, at least one second message for an operation related to a management plane (M-plane) between the DU and the RU through the second session.

11. A client server comprising:
a transceiver;
memory comprising one or more storage media storing instructions; and
at least one processor comprising processing circuitry,
wherein the instructions, when executed by the at least one processor individually or collectively, cause the client server to:
establish a first session and a second session distinct from the first session with a radio unit (RU),
transmit to the RU or receive from the RU, at least one first message for an operation related to supervision through the first session, and
while the at least one first message is transmitted or received through the first session, transmit to the RU or receive from the RU, at least one second message for an operation related to a management plane (M-plane) between a distributed unit (DU) and the RU through the second session.

12. The client server of the claim 11, wherein each of the first session and the second session is established based on one of secure shell/transmission control protocol (SSH) and transport layer security (TLS).

13. The client server of the claim 11, wherein the at least one first message includes a third message for requesting a supervision notification and a fourth message for the supervision notification,
wherein the instructions, when executed by the at least one processor individually or collectively, further cause the client server to:
transmit, to the RU, the third message, and
receive, based on the third message, the fourth message indicating that the RU is operating normally from the RU.

14. The client server of the claim 13, wherein the instructions, when executed by the at least one processor individually or collectively, further cause the client server to enable, based on transmitting the third message, a first timer and a second timer for the RU.

15. A method performed by a client server, comprising:
establishing a first session and a second session distinct from the first session with a radio unit (RU),
transmitting to the RU or receiving from the RU, at least one first message for an operation related to supervision through the first session, and
while the at least one first message is transmitted or received through the first session, transmitting to the RU or receiving from the RU, at least one second message for an operation related to a management plane (M-plane) between a distributed unit (DU) and the RU through the second session.
